# EUROPÄISCHE PATENTANMELDUNG

(11) **EP 2 384 675 A1**
(43) Veröffentlichungstag der Anmeldung: **09.11.2011**
(21) Anmeldenummer: 11157711.0
(22) Anmeldetag: 10.03.2011
(51) Int. Cl.: A47J 36/06, A47J 36/38, A47J 37/10

(54) **Abdeckung für Bratpfannen, Töpfe oder Bräter**

(30) Priorität: 06.05.2010 DE 202010006484 U; 10.12.2010 DE 102010062854
(71) Anmelder: Riensch & Held GmbH & Co. KG, 21035 Hamburg (DE)
(72) Erfinder: Von Ludowig, Horst Ulrich, 21465 Reinbek (DE)
(74) Vertreter: Eisenführ, Speiser & Partner

(57) **Zusammenfassung**

Abdeckung (1) für Bratpfannen, Töpfe oder Bräter, dadurch gekennzeichnet, dass die Abdeckung (1) ein Filterelement (2) zur Geruchsreduktion aufweist, wobei in das Filterelement (2) mindestens ein dampfdurchlässiger Geruchsfilter (3) integriert ist.

## Beschreibung

Die Erfindung betrifft eine Abdeckung für Bratpfannen, Töpfe oder Bräter.

Im Bereich des Bratens ist der Einsatz von Spritzschutzabdeckungen bekannt. Spritzschutzabdeckungen werden dazu verwendet, Bratpfannen, Töpfe oder Bräter zu bedecken, können aber eine Öffnung, durch die das Bratgut zugänglich ist, oder aber auch kleinere Entlüftungsöffnungen zum Entlüften und Ablassen von Dampf aufweisen. Spritzschutzabdeckungen können aus Streckmetall, Kunststoff, Papier, Pappe, Lochblech Silikon oder anderen geeigneten Materialien sein. Spritzschutzabdeckungen sind dazu ausgebildet, beim Braten auftretende Fettspritzer zurückzuhalten.

Beim Braten treten Gerüche auf. Diese entstehen unter Anderem durch Erhitzen des Bratgutes und Verbrennen von Fett. Mittel gegen Bratgeruch sind beispielsweise Dunstabzugshauben, Lüfter, Lüften und ätherische Öle und Parfüme. Diese Maßnahmen sind jedoch nur bedingt wirksam. Insbesondere können sich Bratgerüche trotz Verwendung der zuvor aufgeführten Mittel beispielsweise in Gardinen, Textilien, Kissen, Stuhlbezügen und dergleichen festsetzen.

Der Erfindung liegt daher die Aufgabe zu Grunde, eine effektive Maßnahme gegen Bratgerüche bereitzustellen.

Erfindungsgemäß wird diese Aufgabe bei einer Abdeckung der eingangs genannten Art dadurch gelöst, dass die Abdeckung ein Filterelement zur Geruchsreduktion aufweist, wobei in das Filterelement mindestens ein dampfdurchlässiger Geruchsfilter integriert ist.

Ein Vorteil der Erfindung liegt darin, dass die beim Braten entstehenden Gerüche so nah wie möglich an der Quelle bzw. dem Entstehungsort zurückgehalten werden und gar nicht erst in den Raum, beispielsweise eine Küche, gelangen. Dabei können auch Gerüche durch Schmoren, Garen, Grillen, Anbraten oder weitere Zubereitungsarten beseitigt werden. Die erfindungsgemäße Abdeckdung für Bratpfanne, Topf oder Bräter erfordert aufgrund des integrierten dampfdurchlässigen Geruchsfilters, dass entstehende Dämpfe und heiße Luft durch den Geruchsfilter entweichen. Besonders vorteilhaft ist die Verwendung der erfindungsgemäßen Abdeckung auch für den Fall, dass die Küche zum Wohnraum hin offen ist und somit eine Wohnküche bildet oder in der Küche eine Essecke vorgesehen ist. Bei diesen Einrichtungskonzepten ist die erfindungsgemäße Abdeckung nicht nur während der Zubereitung eines Gerichtes in einer Bratpfanne, einem Topf oder einem Bräter, sondern auch nach Beendigung der Zubereitung nützlich, indem die dann im Wesentlichen entleerten Bratpfannen, Töpfe oder Bräter von der erfindungsgemäßen Abdeckung weiterhin abgedeckt bleiben und dadurch auch die noch von den Lebensmittelresten ausgehenden Gerüche wirkungsvoll zurückgehalten werden. Weiterhin kann die Abdeckung in verschiedenen Formen passend für eine oder mehrere Arten und Größen von Pfannen, Brätern oder Töpfen ausgebildet oder sogar mit einer derartigen universellen Form versehen sein, dass die Abdeckung für alle in Frage kommenden Arten und Größen von Pfannen, Brätern oder Töpfen universell einsetzbar ist.

Es ist bevorzugt, dass das Filterelement und/oder der mindestens eine Geruchsfilter auswechselbar ausgebildet sind. Ein Vorteil dieser Weiterbildung ist, dass der Filterhalter oder der Filter selbst ausgetauscht werden können, wenn die Geruchs-Aufnahmekapazität erreicht ist. Das Wechselteil vermindert somit Abfall.

Es ist bevorzugt, dass das Filterelement als zu öffnender Deckel ausgebildet ist. Ein Vorteil dieser Weiterbildung ist, dass die Abdeckung nicht von Pfanne, Topf oder Bräter entfernt werden muss, um das Bratgut handhaben zu können, beispielsweise um es zu wenden, sofern die Öffnung, die der Deckel wenn geöffnet freigibt, groß genug ist. Damit bleibt die Spritzschutzfunktion gegen Fettspritzer in diesem Falle weitestgehend erhalten.

Es ist bevorzugt, dass der Geruchsfilter einen Aktivkohlefilter, ein Aktivkohlevlies, einen mit Aktivkohle imprägnierten Schaum, eine Schüttung granulierter Aktivkohle, einen oder mehrere extrudierte Aktivkohle-Wabenformkörper und/oder einen Zeolithfilter aufweist.

Es ist bevorzugt, dass der Geruchsfilter bei Temperaturen größer als 200 Grad Celsius regeneriert werden kann, vorzugsweise in einem Backofen. Ein Vorteil dieser Weiterbildung ist, dass der Filter wiederverwendet werden kann.

Nachfolgend werden bevorzugte Ausführungsbeispiele der Erfindung anhand der beiliegenden Zeichnungen näher erläutert. Es zeigen:
- Fig. 1: ein erstes Ausführungsbeispiel einer erfindungsgemäßen Abdeckung mit Draufsicht (Fig. 1A) und in Seitenansicht in Anordnung auf einer Bratpfanne (Fig. 1 B);
- Fig. 2: ein zweites Ausführungsbeispiel einer erfindungsgemäßen Abdeckung in Draufsicht (Fig. 2A) und Seitenansicht (Fig. 2B); und
- Fig. 3: in Seitenansicht ein drittes Ausführungsbeispiel einer erfindungsgemäßen Abdeckung, die auf einer Bratpfanne angeordnet ist.

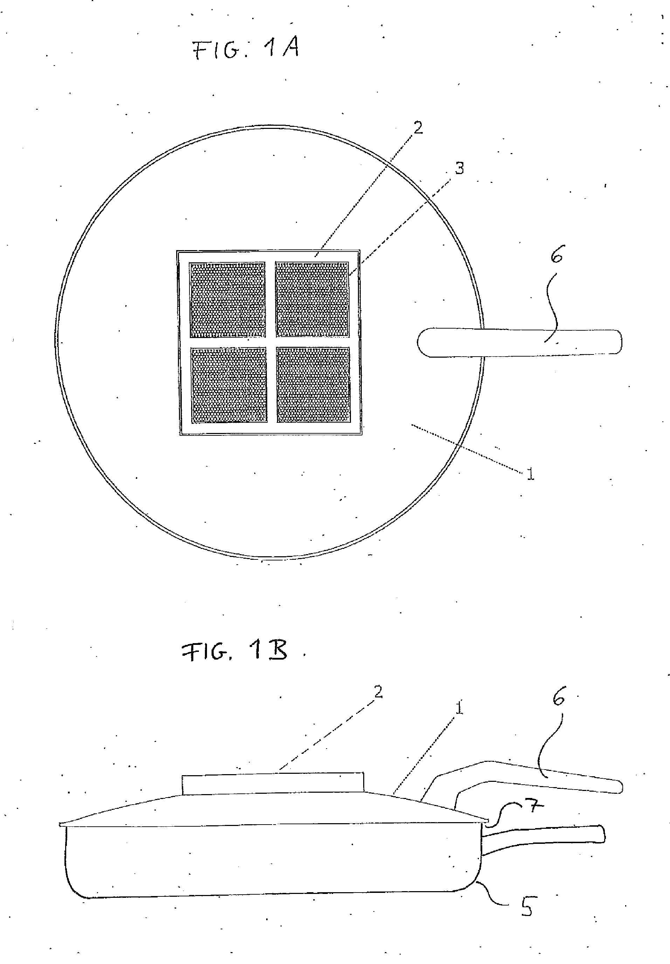

Fig. 1 stellt ein erstes Ausführungsbeispiel der erfindungsgemäßen Abdeckung dar. Fig. 1A zeigt eine Draufsicht auf die Abdeckung 1 mit einem Griff 6 und einem Filterelement 2. Das Filterelement 2 ist mittig in der Abdeckung integriert und umfasst den Geruchsfilter 3. Fig. 1B zeigt eine seitliche Ansicht der Abdeckung 1 aus Fig. 1A, die auf einer Pfanne 5 angeordnet ist und diese am Pfannenrand 7 abschließt. Die Abdeckung ist grundsätzlich nicht dampf- oder luftdurchlässig mit der Ausnahme des Geruchsfilters 3. Die beim Braten entstehenden Dämpfe können also ausschließlich durch den dampfdurchlässigen Geruchsfilter 3 des Filterelementes 2 entweichen, wobei Gerüche und/oder Fett gefiltert und somit zurückgehalten werden. Es ist weiterhin zu erkennen, dass die Abdeckung 1 in der Mitte gewölbt und das Filterelement 2 an der höchsten Stelle angeordnet ist und dabei nur nach oben übersteht, so dass es nicht in die Pfanne 5 hereinreicht.

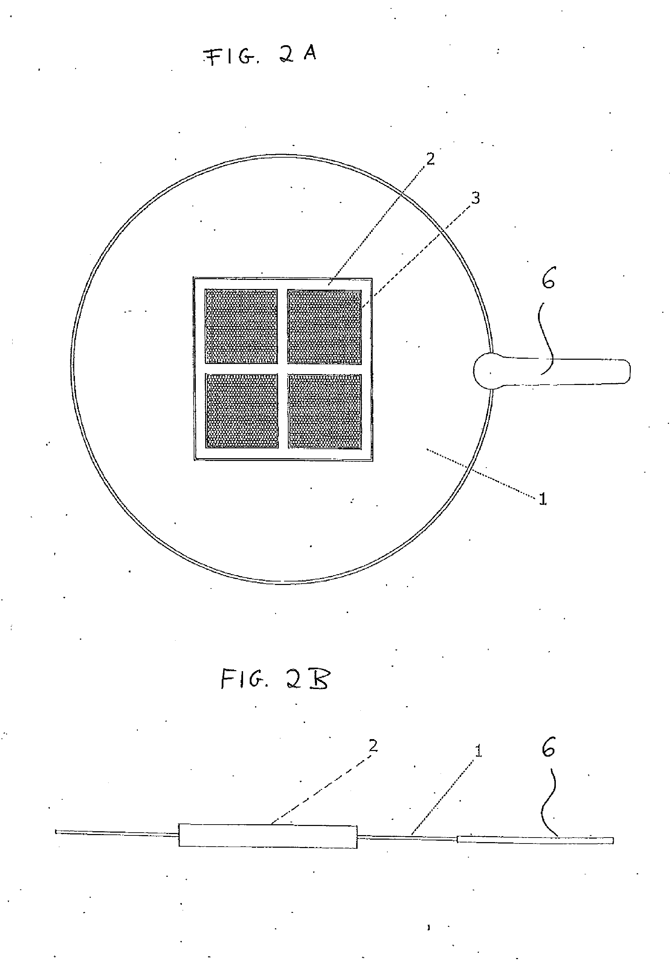

Fig. 2 stellt ein zweites Ausführungsbeispiel der erfindungsgemäßen Abdeckung dar. Fig. 2A zeigt die Draufsicht auf die Abdeckung 1 mit Griff 6 und Filterelement 2. Das Filterelement 2 ist in der Abdeckung integriert und enthält den Geruchsfilter 3. Wie Fig. 2B ferner erkennen lässt, hat die Abdeckung 1 beim zweiten Ausführungsbeispiel im Wesentlichen die Form einer ebenen Platte bzw. Scheibe.

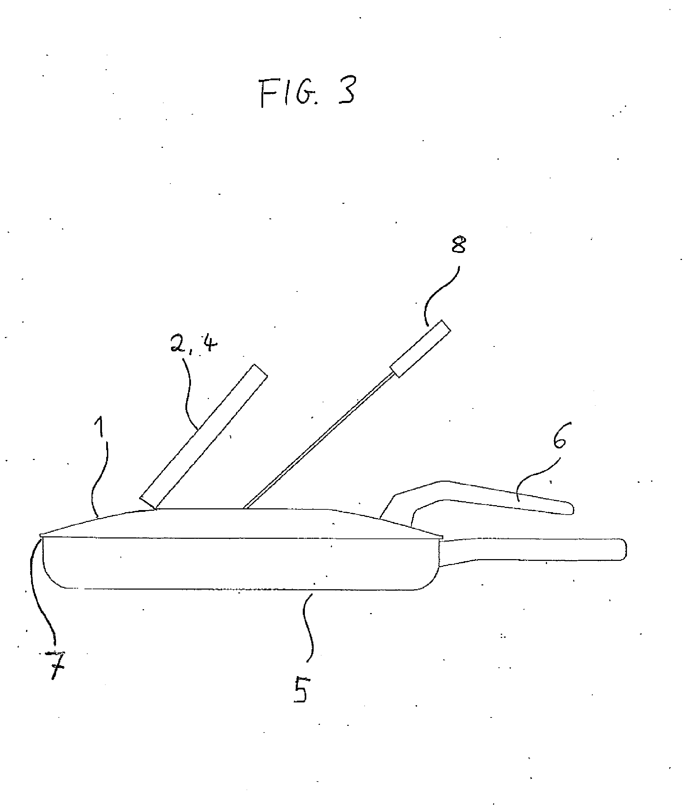

Fig. 3 stellt ein drittes Ausführungsbeispiel der erfindungsgemäßen Abdeckung dar. Gezeigt ist in Seitenansicht eine Abdeckung 1 mit Griff 6, die auf einer Pfanne 5 angeordnet ist und diese am Pfannenrand 7 abschließt. Das Filterelement 2 ist als zu öffnender Zugangsdeckel 4 ausgeführt, der angehoben, abgenommen oder weggeklappt werden kann, um Zugang zum Bratgut zu verschaffen, beispielsweise für einen Pfannenwender 8. Dabei bleibt der Schutz vor Fettspritzern weitestgehend erhalten.

Bei den zuvor beschriebenen Ausführungsbeispielen kann bevorzugt das Filterelement 2 auswechselbar ausgebildet sein. Dabei kann das beispielsweise nicht mehr hinreichend wirksame Filterelement 2 mit integriertem Geruchsfilter 3 von der Abdeckung 1 entfernt und durch ein beispielweise neues Filterelement 2 mit integriertem Geruchsfilter 3 ersetzt werden; somit muss nicht die gesamte Abdeckung 1 ersetzt werden. Die mechanische Kopplung von Abdeckung 1 und Filterelement 2 ist dabei luftundurchlässig ausgeführt.

Bei den zuvor beschriebenen Ausführungsbeispielen kann außerdem bevorzugt der Geruchsfilter 3 auswechselbar ausgebildet sein. Dabei ist das Filterelement 2 so ausgebildet, dass der enthaltene gebrauchte Geruchsfilter 3 entfernt und durch einen neuen Geruchsfilter 3 ersetzt werden kann. Somit muss nicht die gesamte Abdeckung 1 ersetzt werden.Bei den zuvor beschriebenen Ausführungsbeispielen können außerdem bevorzugt in das Filterelement 2 ein oder mehrere Aktivkohle-Wabenformkörper als Geruchsfilter 3 integriert sein. Diese Wabenformkörper aus gepresster Aktivkohle besitzen eine offene Struktur und weisen daher einen niedrigen Strömungswiderstand auf. Dadurch können die beim Braten entstehenden Dämpfe gut entweichen. Der hohe Aktivkohleanteil verbunden mit einer geringen Strömungsgeschwindigkeit gewährleisten eine gute Filtration und Geruchsreduktion. Außerdem kann die Abdeckung 1 mit dem Aktivkohle-Wabenformkörper leicht gereinigt werden, beispielsweise in einem Geschirrspüler. Der Aktivkohle-Wabenformkörper kann beispielsweise auch im Backofen bei Temperaturen höher als 200 Grad Celsius regeneriert werden. Typischerweise erreicht der beladene Aktivkohle-Wabenformkörper nach der Regenerierung 80% bis 90% seines vorherigen Wirkungsgrades.

Bei den zuvor beschriebenen Ausführungsbeispielen können außerdem bevorzugt in das Filterelement 2 ein oder mehrere Aktivkohlefilter als Geruchsfilter 3 integriert sein.

Bei den zuvor beschriebenen Ausführungsbeispielen können außerdem bevorzugt in das Filterelement 2 ein oder mehrere Aktivkohlevliese als Geruchsfilter 3 integriert sein.

Bei den zuvor beschriebenen Ausführungsbeispielen kann außerdem bevorzugt in das Filterelement 2 eine Schüttung granulierter Aktivkohle als Geruchsfilter 3 integriert sein.

Bei den zuvor beschriebenen Ausführungsbeispielen können außerdem bevorzugt in das Filterelement 2 ein oder mehrere extrudierte Aktivkohle-Wabenformkörper als Geruchsfilter 3 integriert sein.

Bei den zuvor beschriebenen Ausführungsbeispielen können außerdem bevorzugt in das Filterelement 2 ein oder mehrere Zeolithfilter als Geruchsfilter 3 integriert sein.

## Patentansprüche

1. Abdeckung (1) für Bratpfannen, Töpfe oder Bräter, **dadurch gekennzeichnet, dass** die Abdeckung (1) ein Filterelement (2) zur Geruchsreduktion aufweist, wobei in das Filterelement (2) mindestens ein dampfdurchlässiger Geruchsfilter (3) integriert ist.

2. Abdeckung (1) nach Anspruch 1, **dadurch gekennzeichnet, dass** das Filterelement (2) und/oder der mindestens eine Geruchsfilter (3) auswechselbar ausgebildet sind.

3. Abdeckung (1) nach Anspruch 1 oder 2, **dadurch gekennzeichnet, dass** das Filterelement (2) als zu öffnender Deckel (4) ausgebildet ist.

4. Abdeckung (1) nach mindestens einem der vorangegangenen Ansprüche, **dadurch gekennzeichnet, dass** der Geruchsfilter (3) einen Aktivkohlefilter aufweist.

5. Abdeckung (1) nach mindestens einem der vorangegangenen Ansprüche, **dadurch gekennzeichnet, dass** der Geruchsfilter (3) ein Aktivkohlevlies aufweist.

6. Abdeckung (1) nach mindestens einem der vorangegangenen Ansprüche, **dadurch gekennzeichnet, dass** der Geruchsfilter (3) einen mit Aktivkohle imprägnierten Schaum aufweist.

7. Abdeckung (1) nach mindestens einem der vorangegangenen Ansprüche, **dadurch gekennzeichnet, dass** der Geruchsfilter (3) eine Schüttung granulierter Aktivkohle aufweist.

8. Abdeckung (1) nach mindestens einem der vorangegangenen Ansprüche, **dadurch gekennzeichnet, dass** der Geruchsfilter (3) einen oder mehrere extrudierte Aktivkohle-Wabenformkörper aufweist.

9. Abdeckung (1) nach mindestens einem der vorangegangenen Ansprüche, **dadurch gekennzeichnet, dass** der Geruchsfilter (3) einen Zeolithfilter aufweist.

10. Abdeckung (1) nach mindestens einem der vorangegangenen Ansprüche, **dadurch gekennzeichnet, dass** der Geruchsfilter (3) bei Temperaturen größer als 200 Grad Celsius regeneriert werden kann, vorzugsweise in einem Backofen.
